# EUROPÄISCHE PATENTSCHRIFT

(11) **EP 2 988 943 B1**
(45) Veröffentlichungstag und Bekanntmachung des Hinweises auf die Patenterteilung: **07.03.2018**
(21) Anmeldenummer: 14723686.3
(22) Anmeldetag: 22.04.2014
(51) Int. Cl.: B41K 1/54, B29K 101/00, B29L 31/00, B29C 45/40, B29C 45/66, B41K 1/40, B29C 45/44

(54) **VORRICHTUNG UND VERFAHREN ZUR HERSTELLUNG EINES FARBKISSENHALTERS MIT RECHTECKIGEM BODEN FÜR EINEN SELBSTFÄRBESTEMPEL**
DEVICE AND METHOD FOR MANUFACTURING AN INKING PAD HOLDER HAVING A RECTANGULAR BOTTOM FOR A SELF-INKING STAMP
DISPOSITIF ET PROCÉDÉ DE FABRICATION D'UN SUPPORT DE COUSSIN POUR TAMPON AUTO-ENCREUR COMPRENANT UNE BASE RECTANGULAIRE

(30) Priorität: 22.04.2013 AT 502712013
(43) Veröffentlichungstag der Anmeldung: 02.03.2016
(73) Patentinhaber: Colop Stempelerzeugung Skopek Gesellschaft m.b.H. & Co. KG., 4600 Wels (AT)
(72) Erfinder: FABER, Ernst, A-4600 Wels (AT)
(74) Vertreter: Sonn & Partner Patentanwälte
(86) Internationale Anmeldenummer: PCT/AT2014/050099
(87) Internationale Veröffentlichungsnummer: WO 2014/172739

(56) Entgegenhaltungen:
- EP-B1- 1 603 755
- WO-A1-01/83227
- WO-A1-96/16816
- WO-A2-2006/076754
- AT-B- 411 976
- DE-A1- 2 308 359
- DE-A1- 2 309 704
- DE-B- 1 244 379
- DE-U1-202004 018 103
- JP-A- 2000 094 479
- US-A- 454 499
- US-A- 3 865 529

## Beschreibung

Die Erfindung betrifft eine Vorrichtung zum Spritzgießen eines Farbkissenhalters mit einem im Wesentlichen rechteckigen Boden gemäß dem Oberbegriff von Anspruch 1.

Weiters ist die Erfindung auf ein Verfahren zur Herstellung eines Farbkissenhalters gemäß dem Oberbegriff von Anspruch 11 gerichtet.

Eine solche Vorrichtung und ein solches Verfahren sind jeweils aus der DE 2 308 359 A1 und DE 1 244 379 B bekannt.

Ein Selbstfärbestempel, bei welchem ein Farbkissenhalter schubladenartig in ein Einschubfach des Stempelgehäuses eingeschoben wird, ist beispielsweise aus der EP 1 603 755 B1 bekannt. Nach Verbrauch der Stempelfarbe im Farbkissen kann der Farbkissen-Behälter aus dem Einschubfach entfernt und durch einen neuen Farbkissen-Behälter oder den ursprünglichen Farbkissen-Behälter mit aufgefülltem Farbkissen ersetzt werden. Hierfür weist das Einschubfach an zumindest einer Seite eine frei zugängliche Einschuböffnung auf. Bei diesem Stand der Technik wird das Farbkissen in den Kissenhalter eingeklebt. Nachteiligerweise kann es bei der Fertigung des Farbkissens in einem Stanzvorgang an den Ecken zur Bildung von Fäden kommen. Beim Einschieben in den Stempel können die mit Farbe getränkten Fäden das Einschubfach verschmutzen. Darüber hinaus hat diese Technik den Nachteil, dass durch Aufwölbungen der Kisseneinlage, speziell an den Längsseiten, die Handhabung des Kissenhalters erschwert wird bzw. Verunreinigungen am Stempel oder auf Seiten eines Benutzers auftreten können.

Darüber hinaus ist aus der AT 411 976 B ein Selbstfärbestempel bekannt geworden, bei welchem ein austauschbarer Farbkissenbehälter an der Unterseite nach innen gerichtete Leistenvorsprünge aufweist.

Aus fertigungstechnischen Gründen war es bei solchen Farbkissenbehältern jedoch erforderlich, dass sich die Leistenvorsprünge nur abschnittsweise entlang des Farbkissenbehälters erstrecken. Hiermit konnte daher nicht das Problem behoben werden, dass das Farbkissen infolge von Aufwölbungen und Fadenbildungen an den Eckbereichen zu einer Verunreinigung des Stempels führen kann. Zudem erforderte die Handhabung des Farbkissenhalters Geschick des Benutzers, um bei Wechselvorgängen Verschmutzungen zu vermeiden.

Die vorliegende Erfindung hat zum Ziel, ein vereinfachtes Verfahren und eine Vorrichtung zur Herstellung von Farbkissenhaltern mit rechteckigem Boden anzugeben.

Zur Lösung dieser Aufgabe ist eine Vorrichtung gemäß Anspruch 1 und ein Verfahren gemäß Anspruch 11 vorgesehen.

Bei dem nicht Teil der Erfindung bildenden Farbkissenhalter kann sich der Haltesteg über die gesamte Länge der Wand erstrecken.

Diese Ausführung hat den Vorteil, dass sich der Haltesteg bis in die Eckbereiche des Farbkissenhalters erstreckt. Damit kann zuverlässig gewährleistet werden, dass Fadenbildung oder Aufwölbungen des Farbkissens nicht zu einem Überstand des Farbkissens an der Oberseite des Farbkissenhalters führen.

Um das Farbkissen innerhalb des Farbkissenhalters zu fixieren, ist es günstig, wenn der Haltesteg an einem vom Boden abgewandten Randbereich der Wand vorgesehen ist. Bei der Montage wird das Farbkissen unter den nach innen vorspringenden Haltesteg am oberen Randbereich der Wand gedrückt, wodurch das Farbkissen in dem Aufnahmeraum fixiert wird.

Wenn der Haltesteg im Wesentlichen senkrecht zur Wand angeordnet ist, kann der Farbkissenhalter vorteilhafterweise dieselbe Bauhöhe wie herkömmliche Ausführungen ohne Haltesteg aufweisen. Darüber hinaus kann ein sicherer Halt des Farbkissens in dem Aufnahmeraum gewährleistet werden.

Um in Gebrauch zuverlässig zu verhindern, dass sich das Farbkissen aus der bestimmungsgemäßen Lage lockert und über die Zugangsöffnung des Farbkissenhalters vorragt oder sich das Farbkissen sogar aus dem Farbkissenhalter löst, ist es vorteilhaft, wenn die Wand mit dem Haltesteg an einer Längsseite des Farbkissenhalters vorgesehen ist. Bei dieser Ausführung weist der Farbkissenhalter daher Längs- und Schmalseiten auf, wobei der Haltesteg an einer der Längsseiten vorgesehen ist. Zur Anordnung in den Einschubfächern handelsüblicher Selbstfärbestempeln weist der Farbkissenhalter erfindungsgemäß einen im Wesentlichen rechteckigen Boden auf, von dessen Längs- bzw. Querrändern die Wände abgewinkelt sind. Durch Ausbildung des Haltestegs an einer Längsseite des Farbkissenhalters kann sichergestellt werden, dass das Farbkissen ausreichend in Richtung des Bodens des Farbkissenhalters gedrückt wird, um das Farbkissen in der bestimmungsgemäßen Lage zu halten.

Die Fixierung des Farbkissens in dem Farbkissenhalter kann weiter gestärkt werden, wenn zumindest zwei Wände, vorzugsweise an den Längsseiten, Haltestege aufweisen. Gemäß einer bevorzugten Ausführung weist der Farbkissenhalter nur an den beiden Längsseiten, nicht jedoch an den Schmalseiten Haltestege auf. Andererseits kann auch vorgesehen sein, dass der Farbkissenhalter sowohl an den Längs- als auch an den Schmalseiten Haltestege aufweist.

Um einerseits im montierten Zustand einen ausreichenden Halt des Farbkissens in dem Farbkissenhalter zu gewährleisten und andererseits die Montage des Farbkissens durch Eindrücken in den Aufnahmeraum nicht übermäßig zu erschweren, ist es von Vorteil, wenn der Haltesteg eine Breite von 0,8 bis 2,5mm, insbesondere von 0,9 bis 1,3 mm, vorzugsweise im Wesentlichen 1 mm, aufweist. Die Breite bezieht sich in diesem Zusammenhang auf die Erstreckung des Haltestegs weg von der zugehörigen Wand des Farbkissenhalters.

Aus fertigungstechnischen Gründen ist zu bevorzugen, wenn der Haltesteg einteilig mit der Wand gebildet ist.

Bei dieser Ausführung ist zudem günstig, wenn der Boden, die Wände und der zumindest eine Haltesteg einteilig, insbesondere als Spritzgussteil, gebildet sind.

Bei der erfindungsgemäßen Vorrichtung weist das Spritzgießwerkzeug zumindest ein sich über die gesamte Länge des Formhohlraumes erstreckendes Schieberteil auf, welches zwischen einer den Haltesteg des Farbkissenhalters hintergreifenden Spritzstellung und einer den Haltesteg freigebenden Trennstellung in eine Richtung abweichend von der Öffnungs- bzw. Schließrichtung der Werkzeugteile beweglich angeordnet ist.

Zum Spritzgießen des Farbkissenhalters wird daher zunächst das Spritzgießwerkzeug in der Schließstellung angeordnet, in welcher die Form des Farbkissenhalters durch den Formhohlraum abgebildet wird. Durch Einspritzen eines Ausgangsmaterials in plastifiziertem Zustand wird der Farbkissenhalter in den Formhohlraum ausgebildet. Beim Spritzgießen ist das Schieberteil in der Spritzstellung angeordnet, in welcher sich das Schieberteil abschnittsweise unterhalb eines den Haltesteg ausbildenden Bereichs des Formhohlraumes angeordnet ist. Bevorzugt ist das Schieberteil in der Spritzstellung so angeordnet, dass das Schieberteil einen im Querschnitt im Wesentlichen U-förmigen Bereich des Formhohlraums freilässt, um einerseits die Wand mit dem Haltesteg und andererseits den Randbereich des Bodens auszubilden. Durch Überführung des Schieberteils quer zur Schließ- bzw. Öffnungsrichtung des Spritzgießwerkzeugs und weg von der den Haltesteg aufweisenden Wand des Farbkissenhalters in die Trennstellung ist das Schieberteil aus dem Eingriff mit dem Haltesteg lösbar, so dass das Spritzgießwerkzeug nach Beendigung des Spritzgießvorgangs in Öffnungsrichtung öffenbar ist, um den fertigen Farbkissenhalter aus dem Spritzgießwerkzeug entfernen zu können. Zur Überführung in die Trennstellung ist das Schieberteil zumindest um die Breite des Haltestegs bewegbar, wobei vorzugsweise zudem eine über die Breite des Haltestegs hinausgehende Sicherheitsstrecke zurückgelegt wird, um eine Blockierung des Spritzgießwerkzeugs durch den Schieberteil beim Trennen der Werkzeugteile in Öffnungsrichtung zuverlässig zu vermeiden. Erfindungsgemäß ist an einem der Werkzeugteile zumindest ein Auswerfer zum Entfernen des Farbkissenhalters aus dem Formhohlraum vorgesehen, wobei das zumindest eine Schieberteil von dem Auswerfer verschieden ist. Demnach sind als Schieberteil und Auswerfer gesonderte Bauteile vorgesehen, so dass die Bewegung des Schieberteils zur Freigabe des Haltestegs des Farbkissenhalters unabhängig von dem Entfernen des Farbkissenhalters aus dem Formhohlraum durchführbar ist. Diese Ausführung hat den Vorteil, dass der Farbkissenhalter in dem Formhohlraum fixiert vorliegt, wenn das zumindest eine Schieberteil zur Entformung von der Längsseite des Formhohlraums wegbewegt wird. Dadurch wird verhindert, dass der Farbkissenhalter an einem der Schieberteile anhaftet und von diesem Schieberteil mitgenommen wird. Dies konnte bei bekannten Spritzgießwerkzeugen nur dadurch vermieden werden, dass die Eckbereiche des Farbkissenhalters von den Haltestegen freigehalten werden und so zur Zentrierung des Farbkissenhalters beitragen. Demgegenüber wird bei der vorliegenden Ausführung zunächst der Haltesteg durch Betätigung des Schieberteils freigegeben, anschließend der Formhohlraum geöffnet und schließlich der Farbkissenhalter durch Betätigung des Auswerfers aus dem Formhohlraum entfernt.

Zur Ausbildung eines im Wesentlichen senkrecht zur Wand angeordneten Haltestegs ist es günstig, wenn das Schieberteil im Wesentlichen senkrecht zur Öffnungs- bzw. Schließrichtung der Werkzeugteile beweglich angeordnet ist. Nach Abschluss des Spritzvorgangs wird daher zunächst das Schieberteil im Wesentlichen senkrecht zur Öffnungsrichtung bewegt, bis das Schieberteil aus dem Eingriff des Haltestegs gelöst wird, bevor das Spritzgießwerkzeug durch eine Relativbewegung zwischen den Werkzeugteilen geöffnet werden kann.

Zur Ausbildung von zwei Haltestegen an gegenüberliegenden Seiten des Farbkissenhalters ist es vorteilhaft, wenn zwei Schieberteile in entgegengesetzte Richtungen beweglich angeordnet sind.

Demnach sind die beiden Schieberteile nach Abschluss des Spritzvorgangs zur Freigabe der Haltestege gegenläufig verschiebbar, wobei die Bewegung des einen Schieberteils vorzugsweise an jene des anderen Schieberteils gekoppelt ist.

Gemäß einer besonders bevorzugten Ausführung ist vorgesehen, dass das erste Werkzeugteil und das zweite Werkzeugteil zwischen der Spritzstellung und der Trennstellung um eine vorgegebene Strecke gemeinsam in Öffnungs- bzw. Schließrichtung verschieblich sind, wobei das Spritzgießwerkzeug korrespondierende Führungsmittel aufweist, mit welchen die gemeinsame Verschiebung der Werkzeugteile in Öffnungs- bzw. Schließrichtung in die Bewegung des Schieberteils zwischen der Spritz- und der Trennstellung umsetzbar ist. Demnach ist die Verschiebung der Werkzeugteile entlang der vorgegebenen Strecke in Öffnungsrichtung an die Bewegung des Schieberteils in die Trennstellung gekoppelt.

Um das Schieberteil entsprechend der gemeinsamen Verschiebung der Werkzeugteile entlang der vorgegebenen Strecke in die Trennstellung zu bewegen, ist es von Vorteil, wenn die Führungsmittel schräg zur Öffnungs- bzw. Schließrichtung, insbesondere unter einem Winkel von 6° bis 20°, angeordnete Führungsflächen aufweisen. Durch die Neigung der Führungsflächen kann die Übersetzung zwischen der Verschiebung der Werkzeugteile und der Bewegung des Schieberteils festgelegt werden.

Hierbei ist es vorteilhaft, wenn die eine Führungsfläche an dem Schieberteil vorgesehen ist, wobei die andere Führungsfläche vorzugsweise am vorderen Ende einer Spritzdüse ausgebildet ist. Das vordere Ende der Spritzdüse läuft hierbei vorzugsweise konisch zusammen. Bei der Überführung zwischen Spritz- und Trennstellung gleiten die Führungsflächen von Schieberteil und Spritzdüse aneinander.

In einer bevorzugten Ausführung ist vorgesehen, dass die Führungsmittel ein Feder- oder Zugkraftelement aufweisen, welches die Bewegung des Schieberteils in die Trennstellung bewirkt. Zur Verschiebung des Schieberteils in die Trennstellung können insbesondere Federmittel oder Kernzüge vorgesehen sein.

Gemäß einer bevorzugten Ausführung weist das Spritzgießwerkzeug einen Anschlag zur Begrenzung der Verschiebung des ersten Werkzeugteils in Öffnungsrichtung auf, wobei das zweite Werkzeugteil zum Trennen der Werkzeugteile relativ zu dem in die Anschlagstellung verschobenen ersten Werkzeugteil beweglich ist. Demnach ist das Spritzgießwerkzeug aus der Schließstellung zum Spritzgießen des Farbkissenhalters in Öffnungsrichtung über die Anschlagstellung des ersten Werkzeugteils, welche der Trenn- bzw. Freigabestellung des Schieberteils entspricht, in die Offenstellung zur Entnahme des Farbkissenhalters verschiebbar. Vorteilhafterweise kann hiermit das Entformen in einem einzigen Bewegungsvorgang bewerkstelligt werden.

Um das erste Werkzeugteil über die vorgegebene Strecke in Richtung der Offenstellung mitzunehmen, wenn das zweite Werkzeugteil in die Offenstellung verschoben wird, ist bevorzugt vorgesehen, dass das erste Werkzeugteil mit einem Federmittel verbunden ist, welches das erste Werkzeugteil in Richtung der der Trennstellung entsprechenden Anschlagstellung vorspannt. Nach Erreichen der Anschlagstellung des ersten Werkzeugteils ist das zweite Werkzeugteil bei stillstehendem ersten Werkzeugteil bis zur Offenstellung verschiebbar.

Zum Öffnen des Spritzgießwerkzeugs ist es günstig, wenn das zweite Werkzeugteil mit einem Antrieb, insbesondere einem Hydraulikantrieb, verbunden ist.

Bei dem erfindungsgemäßen Verfahren wird der Haltesteg in einer Spritzstellung von einem sich über die gesamte Länge der Wand erstreckenden Schieberteil hintergriffen, welches anschließend in eine den Haltesteg freigebende Trennstellung verschoben wird.

Hinsichtlich der Vorteile und technischen Effekte eines solchen Verfahrens wird auf die vorstehenden Ausführungen verwiesen.

Die Erfindung wird nachstehend anhand von in den Zeichnungen dargestellten bevorzugten Ausführungsbeispielen, auf die sie jedoch nicht beschränkt sein soll, noch weiter erläutert. Im Einzelnen zeigen in den Zeichnungen:
Fig. 1 eine Schnittansicht eines nicht Teil der Erfindung bildenden Selbstfärbestempels, bei welchem in einem Einschubfach ein herkömmlicher Farbkissenhalter angeordnet ist;
Fig. 2a eine Ansicht eines nicht Teil der Erfindung bildenden Farbkissenhalters, bei welchem an den Längsseiten Haltevorsprünge vorgesehen sind, die sich jedoch nicht bis in die Eckbereiche erstrecken;
Fig. 2b bis 2d Ansichten eines Spritzgusswerkzeugs in verschiedenen Stadien der Fertigung des bekannten Farbkissenhalters;
Fig. 3a eine schaubildliche Ansicht eines nicht Teil der Erfindung bildenden Farbkissenhalters, bei welchem sich Haltestege an den Längsseiten über die gesamte Länge des Farbkissenhalters erstrecken;
Fig. 3b einen Schnitt entlang der Linie IIIb-IIIb in Fig. 3a;
Fig. 3c einen Schnitt entlang der Linie IIIc-IIIc in Fig. 3a;
Fig. 3d eine vergrößerte Ansicht von Detail A gemäß Fig. 3c;
Fig. 4a eine schaubildliche Ansicht einer weiteren Ausführung des nicht Teil der Erfindung bildenden Farbkissenhalters, bei welcher sich Haltestege an den Längs- und Schmalseiten befinden;
Fig. 4b einen Schnitt entlang der Linie IVb-IVb in Fig. 4a; und
Fig. 4c einen Schnitt entlang der Linie IVc-IVc in Fig. 4a;
Fig. 5 bis 8 Ansichten einer erfindungsgemäßen Vorrichtung zur Herstellung des Farbkissenhalters gemäß Fig. 3 bis 5 mit einem Spritzgießwerkzeug, welches zwischen einer Spritzstellung beim Spritzen des Farbkissenhalters (Fig. 5), einer den Haltesteg des fertigen Farbkissenhalters freigebenden Trennstellung (Fig. 6), einer Offenstellung (Fig. 7) und einer Auswurfstellung (Fig. 8) überführbar ist.

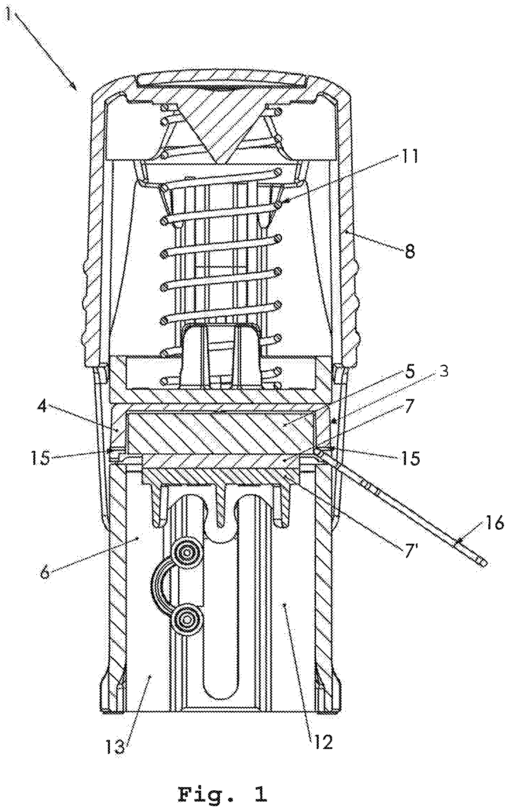

In Fig. 1 ist ein an sich herkömmlicher Selbstfärbestempel 1 gezeigt, der ein rahmenartig ausgebildetes Stempelgehäuse 2 (nachstehend kurz Gehäuse 2) aufweist. Das Gehäuse 2 weist ein Einschubfach 3 für einen darin austauschbar angeordneten Farbkissenhalter 4 auf, in dem ein Farbkissen 5 aufgenommen ist. Zum Austausch des Farbkissenhalters 4 wird gemäß Fig. 1 eine Büroklammer 16 verwendet, mit welcher in eine Aussparung 15 des Farbkissenhalters 4 eingegriffen wird. Alternativ kann das Einschubfach nach beiden Seiten offen sein, so dass der Farbkissenhalter 4 ohne Aussparung 15 aus dem Einschubfach 3 gedrückt werden kann. Im Inneren des Gehäuses 2 ist weiters eine Stempeleinheit 6 angeordnet, die eine an einem Stempelplattenträger 7' angebrachte Stempelplatte 7 mit Stempeltypen aufweist. Die Stempeleinheit 6 ist in Fig. 1 in einer an dem Farbkissen 5 anliegenden Einfärbestellung dargestellt.

Zur Betätigung des Selbstfärbestempels 1 ist ein Betätigungsbügel 8 vorgesehen, der im gezeigten Beispiel haubenartig auf das Gehäuse 2 aufgesetzt ist. Der Betätigungsbügel 8 weist an den Schmalseiten Schenkel (nicht dargestellt) auf, die in passende Führungen an den schmalen Seitenwänden des Gehäuses 2 eingesetzt und darin verschieblich geführt sind. Zwischen dem Betätigungsbügel 8 und dem Gehäuse 2 wirkt eine Feder 11, welche den Betätigungsbügel 8 in seiner gezeigten oberen Position und somit die Stempeleinheit 6 in der Einfärbestellung hält. Die Verschiebung des Betätigungsbügels 8 in seine untere End- bzw. Betätigungsposition wird in an sich bekannter Weise über einen Wendemechanismus 12 übertragen, welcher eine Verschwenkung der Stempeleinheit 6 aus der gezeigten Einfärbestellung in eine zum Bedrucken einer Abdruckfläche vorgesehene Abdruckstellung sowie gleichzeitig eine Abwärtsbewegung bewirkt. In der Abdruckstellung ragt die Stempelplatte 7 mit den Stempeltypen durch eine untere Öffnung 13 des Gehäuses 2, so dass ein Abdruck auf einer Abdruckfläche erzeugt werden kann. Der Wendemechanismus 12 weist z.B. eine im Stand der Technik an sich bekannte Kurvensteuerung bzw. Schlitzführung auf, um die Stempeleinheit 6 bei Betätigung des Betätigungsbügels 8 um 180° in die Abdruckstellung zu wenden. Diese oder ähnliche Wendemechanismen sind im Stand der Technik hinlänglich bekannt, so dass sich eine weitere Erläuterung erübrigen kann.

Gemäß Fig. 1 ist das Farbkissen 5 mittels einer Klebeverbindung in dem Farbkissenhalter 4 gehalten.

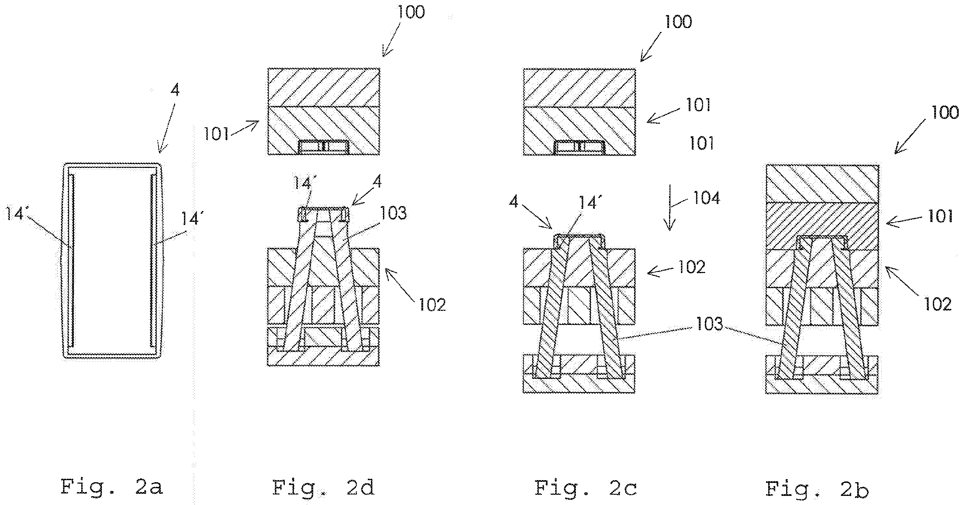

Darüber hinaus wurde bereits ein Farbkissenhalter 4 gemäß Fig. 2a bekannt, bei welchem an den Längsseiten Haltevorsprünge 14' vorgesehen sind, mit welchen das Farbkissen 5 in dem Farbkissenhalter 4 fixiert werden sollte. Aus fertigungstechnischen Gründen war jedoch vorgesehen, dass sich die Haltevorsprünge 14' nicht in die Eckbereiche des Farbkissenhalters 4 erstrecken.

In den Fig. 2b bis 2d ist schematisch die Herstellung des bekannten Farbkissenhalters 4 in einem Spritzgießwerkzeug 100 gezeigt, welches ein erstes Werkzeugteil 101 und ein zweites Werkzeugteil 102 aufweist. Gemäß Fig. 2b ist das Spritzgießwerkzeug in einer einen Formhohlraum einschließenden Schließstellung angeordnet, in welcher der Farbkissenhalter 4 durch Spritzgießen erzeugt wird. Das zweite Werkzeugteil 102 des Spritzgießwerkzeugs 100 weist zwei Auswerfer 103 auf, deren vordere Enden beim Spritzgießen die Freiräume für die Haltevorsprünge 14' hintergreifen. Nach Abschluss des Spritzvorgangs wird das zweite Werkzeugteil 102 vom ersten Werkzeugteil 101 in Öffnungsrichtung 104 wegbewegt (vgl. Fig. 2c). Anschließend werden die Auswerfer 103 in Öffnungsrichtung verschoben (vgl. Fig. 2d). Aufgrund der Schrägstellung der Auswerfer 103 bezüglich der Öffnungsrichtung 104 werden die vorderen Enden der Auswerfer 103 beim Öffnen des Spritzgießwerkzeugs 100 nach innen verschoben, wodurch die Haltevorsprünge 14' freigegeben werden. Demnach erfolgt die Entformung erst beim Auswerfen des Farbkissenhalters 4. Dieses Verfahren ist einerseits aufwändig. Zudem ist es zwingend erforderlich, dass die Haltevorsprünge 14' die Eckbereiche des Farbkissenhalters 4 freilassen, da diese fixen Ecken den Kissenhalter während der Entformung zentrieren und eine Verschiebung hin zu einem der beiden Auswerfer 103 verhindern. Würden diese Ecken bei dieser Ausführung weggelassen, so könnte der Kissenhalter an einem der beiden gegenläufigen Auswerfer 103 anhaften mit der Folge, dass die Entformung fehlschlagen würde.

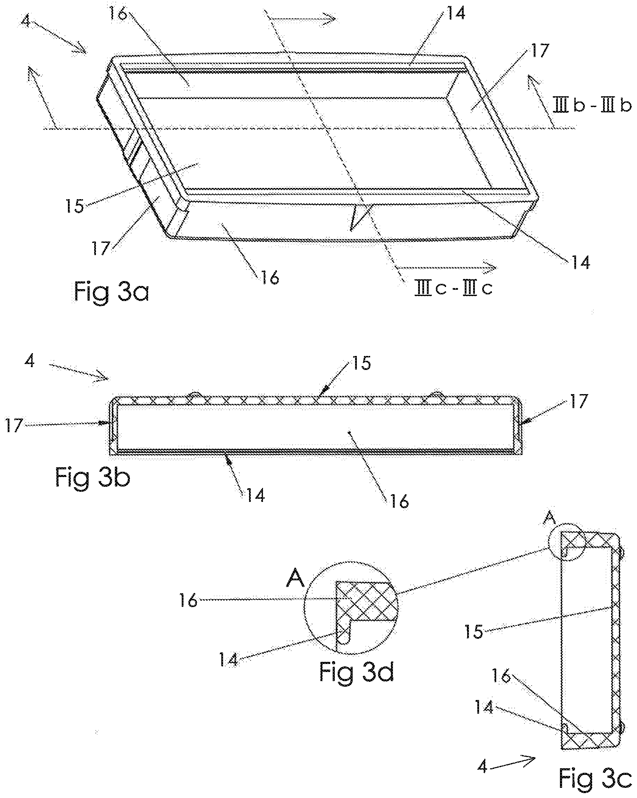

In Fig. 3 ist ein Farbkissenhalter 4 gezeigt, welcher, wie die bekannte Ausführung gemäß Fig. 2, einen Boden 15 mit hiervon an den Längs- bzw. Schmalseiten abstehenden Wänden 16 bzw. 17 aufweist. Gemäß Fig. 3 erstrecken sich zwei Haltestege 14 über die gesamte Länge der einander gegenüberliegenden Längs-Wände 16 des Farbkissenhalters 4.

Wie aus Fig. 3 weiters ersichtlich, sind die Haltestege 14 im Wesentlichen senkrecht von den vom Boden 15 abgewandten Randbereichen der längsseitigen Wände 16 abgewinkelt. In der Ausführung gemäß Fig. 3 weisen nur die längsseitigen Wände 16 die Haltestege 14 auf, wobei die schmalseitigen Wände 17 frei von Haltestegen 14 sind. Die Haltestege 14 weisen hierbei eine Breite von im Wesentlichen 1 mm auf. Der Farbkissenhalter 14 ist bevorzugt durch ein Spritzgussteil gebildet, welches den Boden 15, die Wände 16, 17 und die Haltestege 14 aufweist.

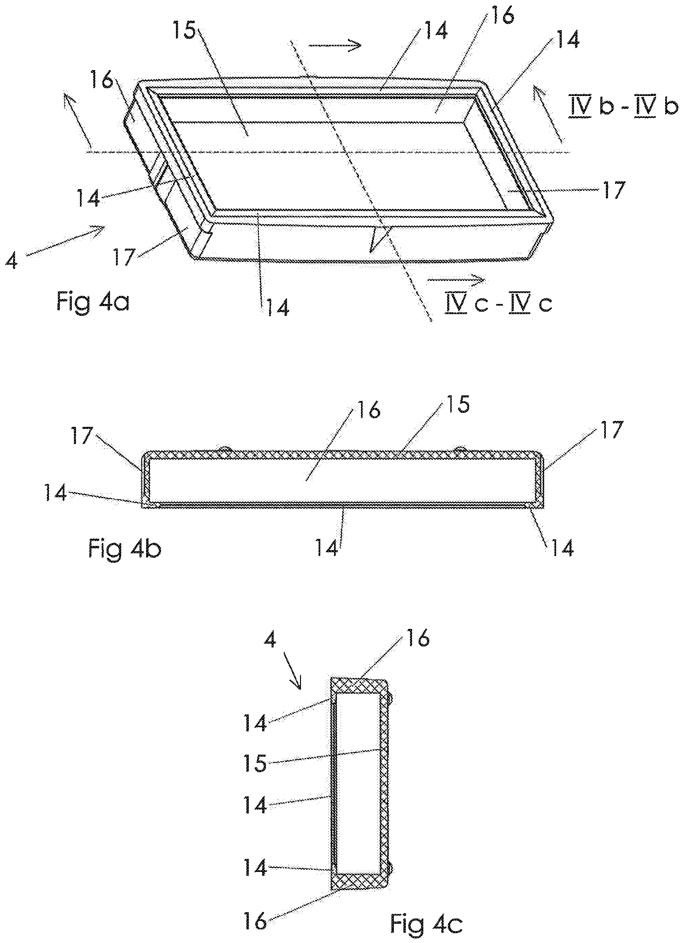

Die Ausführung gemäß Fig. 4 unterscheidet sich dadurch von jener der Fig. 3, dass der Farbkissenhalter 4 zusätzlich Haltestege 14 an den Schmalseiten des Farbkissenhalters 4 aufweist. Somit sind gemäß Fig. 4 insgesamt vier Haltestege vorgesehen, welche sich unterbrechungsfrei entlang der Zugangsöffnung in den Aufnahmeraum für das Farbkissen 5 erstrecken.

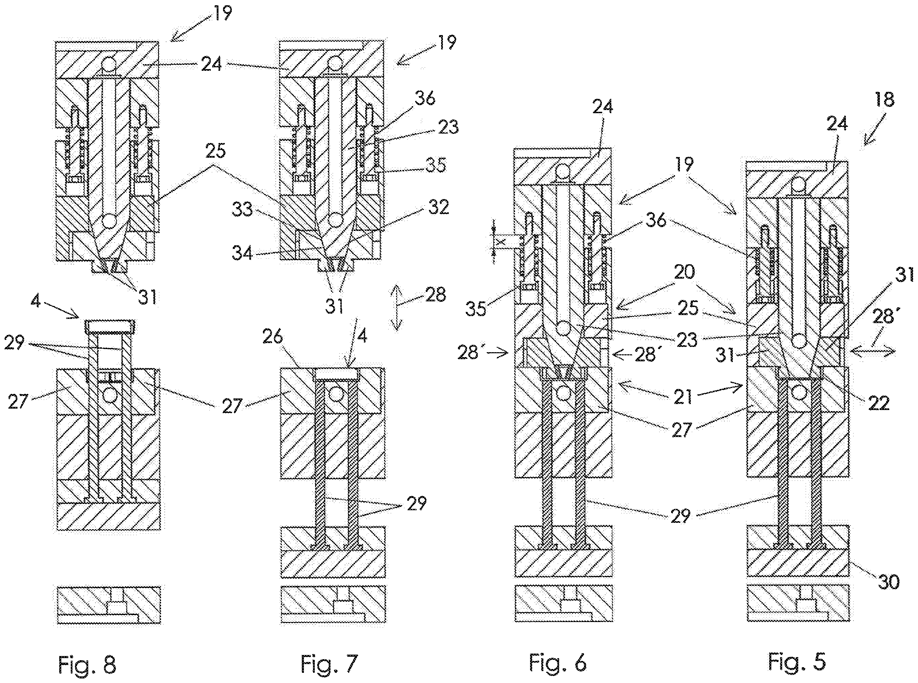

Die Fertigung des in Fig. 3 dargestellten Farbkissenhalters 14 wird nachstehend anhand der Fig. 5 bis 8 erläutert.

Fig. 5 zeigt schematisch eine Vorrichtung 18 zum Spritzgießen des Farbkissenhalters 4 mit einem Spritzgießwerkzeug 19, welches ein erstes Werkzeugteil 20 und ein zweites Werkzeugteil 21 aufweist. Das Spritzgießwerkzeug 19 ist gemäß Fig. 5 in einer Schließstellung angeordnet, in welcher die Werkzeugteile 20, 21 einen den Farbkissenhalter 4 abbildenden Formhohlraum 22 einschließen. Die Vorrichtung 18 weist weiters eine Spritzdüse 23 auf, welche in bekannter Weise in einer Aufspannplatte 24 gelagert ist. Mit Hilfe der Spritzdüse 23 ist ein Kunststoffmaterial in plastifiziertem Zustand in den Formhohlraum 22 einbringbar. Das erste Werkzeugteil 20 weist weiters eine Formplatte 25 auf, welche mit einer Formplatte 27 des zweiten Werkzeugteils 21 den Formhohlraum 22 festlegt. Das zweite Werkzeugteil 21 ist mit einem (nicht gezeigten) Antrieb verbunden, mit welchem das zweite Werkzeugteil 21 in Öffnungs- bzw. Schließrichtung (vgl. Pfeile 28) relativ zum ersten Werkzeugteil 20 beweglich ist. Darüber hinaus weist das zweite Werkzeugteil 21 zwei Auswerfer 29 zum Auswerfen des fertigen Farbkissenhalters 4 auf. Die Auswerfer 29 sind an einer Stirnplatte 30 gelagert, welche gegen die Formplatte 27 des zweiten Werkzeugteils 21 beweglich ist, um den Farbkissenhalter 4 aus dem Formhohlraum 22 zu entfernen (vgl. Fig. 8).

Wie aus Fig. 5 weiters ersichtlich, weist das Spritzgießwerkzeug 19 zudem zwei Schieberteile 31 auf, welche sich senkrecht zur Figurenebene über die gesamte Länge des Formhohlraumes 22 erstrecken, so dass die Haltestege 14 entlang der Wände 16 des Farbkissenhalters 4 erzeugt werden können. Gemäß Fig. 5 sind die Schieberteile 31 in einer Spritzstellung beim Spritzen des Farbkissenhalters 4 angeordnet, wobei die Schieberteile 31 die gegenüberliegenden Haltestege 14 des Farbkissenhalter 4 (bzw. vor dem Einspritzen des Kunststoffmaterials die entsprechenden Freiräume des Formhohlraumes 22) hintergreifen. Die Schieberteile 31 sind an dem ersten Werkzeugteil 20 angeordnet, wobei der Farbkissenhalter 4 in dem zweiten Werkzeugteil 21 ausgebildet wird. In der in Fig. 5 gezeigten Spritzstellung könnte das Spritzgießwerkzeug 19 nicht geöffnet werden, da die Haltestege 14 eine Relativbewegung zwischen der Formplatte 25 des ersten Werkzeugteils 20 und der Formplatte 27 des zweiten Werkzeugteils 21 entlang der Haupttrennebene 26 blockieren würde.

Wie aus Fig. 6 ersichtlich, sind die Schieberteile 31 aus der Spritzstellung gemäß Fig. 5 in eine Richtung senkrecht zur Öffnungs- bzw. Schließrichtung 28 bzw. weg von den die Haltestege 14 aufweisenden Wänden 16 des Farbkissenhalters 4 in eine die Haltestege 14 freigebende Trennstellung überführbar (vgl. Pfeile 28' in Fig. 5 und 6), welche das Öffnen des Spritzgießwerkzeugs 19 zur Entnahme des Farbkissenhalters 4 ermöglicht.

Wie aus Fig. 6 weiters ersichtlich, sind das erste Werkzeugteil 20 und das zweite Werkzeugteil zwischen der Spritzstellung (Fig. 5) und der Trennstellung (Fig. 6) um eine vorgegebene Strecke x gemeinsam in Öffnungs- bzw. Schließrichtung 28 verschieblich. Das Spritzgießwerkzeug 19 weist hierbei Führungsmittel 32 auf (s. Fig. 7), um die gemeinsame Verschiebung der Werkzeugteile 20, 21 entlang der Strecke x in die Querbewegung der Schieberteile 31 von der Spritzstellung gemäß Fig. 5 in die Trennstellung gemäß Fig. 6 zu übertragen. Die Führungsmittel 32 weisen hierbei schräg zur Öffnungs- bzw. Schließrichtung 28, beispielsweise unter einem Winkel von 15°, angeordnete Führungsflächen 33, 34 auf. In der gezeigten Ausführung sind die einen Führungsflächen 33 an den Schieberteilen 31 vorgesehen, wobei die anderen Führungsflächen 34 am konisch zusammenlaufenden vorderen Ende der Spritzdüse 23 ausgebildet ist. Darüber hinaus weisen die Führungsmittel 32 ein (nicht gezeigtes) Feder- oder Zugkraftelement auf, welches die Bewegung der Schieberteile 31 entlang der Führungsflächen 33, 34 in die Trennstellung bewirkt.

Um die Verschiebung des ersten Werkzeugteils 20 auf die Strecke x zu begrenzen, weist das Spritzgießwerkzeug 19 weiters einen Anschlag 35 auf, so dass das zweite Werkzeugteil 21 bei Erreichen der Anschlagstellung des ersten Werkzeugteils 20, welche der Trennstellung der Schieberteile 31 entspricht, alleine weiter in Richtung der Offenstellung (Fig. 7) bewegbar ist. Darüber hinaus ist das erste Werkzeugteil 20 mit einem Federmittel 36 verbunden, welches das erste Werkzeugteil 20 in Öffnungsrichtung vorspannt, so dass das erste Werkzeugteil 20 mitgenommen wird, wenn das zweite Werkzeugteil 21 in Richtung der Offenstellung bewegt wird.

Schließlich können - s. Fig. 8 - die Auswerfer 29 betätigt werden, um den Farbkissenhalter 4 aus dem Spritzgießwerkzeug 19 zu entfernen.

Aus dem vorstehenden Beispiel wird deutlich, dass der Farbkissenhalter 4 gemäß Fig. 3 oder Fig. 4 durch ein Verfahren herstellbar ist, bei welchem der Haltesteg 14 in einer Spritzstellung von einem sich über die gesamte Länge der zugehörigen Wand 16 erstreckenden Schieberteil 31 hintergriffen wird, welches anschließend in eine den Haltesteg 14 freigebende Trennstellung verschoben wird.

## Patentansprüche

1. Vorrichtung (18) geeignet zum Spritzgießen eines Farbkissenhalters (4) mit einem im Wesentlichen rechteckigen Boden (15), mit einem ein erstes (20) und ein zweites Werkzeugteil (21) aufweisenden Spritzgießwerkzeug (19), welches in einer Schließstellung einen Formhohlraum (22) einschließt, wobei das erste (20) und das zweite Werkzeugteil (21) in Öffnungs- bzw. Schließrichtung (28) relativ zueinander beweglich gelagert sind, wobei das Spritzgießwerkzeug (19) zumindest ein sich über die gesamte Länge des Formhohlraumes (22) erstreckendes Schieberteil (31) aufweist, welches zwischen einer einen Haltesteg (14) des Farbkissenhalters (4) hintergreifenden Spritzstellung und einer den Haltesteg (14) freigebenden Trennstellung in eine Richtung (28') abweichend von der Öffnungs- bzw. Schließrichtung (28) der Werkzeugteile (20, 21) beweglich angeordnet ist, **dadurch gekennzeichnet, dass** an einem der Werkzeugteile (20, 21) zumindest ein Auswerfer (29) zum Entfernen des Farbkissenhalters (4) aus dem Formhohlraum (22) vorgesehen ist, wobei das zumindest eine Schieberteil (31) von dem Auswerfer (29) verschieden ist, so dass der Farbkissenhalter in dem Formhohlraum (22) fixiert vorliegt, wenn das zumindest eine Schieberteil (31) zur Entformung von der Längsseite des Formhohlraums (22) wegbewegt wird.

2. Vorrichtung (18) nach Anspruch 1, **dadurch gekennzeichnet, dass** das Schieberteil (31) zur Ausbildung eines im Wesentlichen senkrecht zur Wand angeordneten Haltestegs (14) im Wesentlichen senkrecht zur Öffnungs- bzw. Schließrichtung (28) der Werkzeugteile (20, 21) beweglich angeordnet ist.

3. Vorrichtung (18) nach Anspruch 1 oder 2, **dadurch gekennzeichnet, dass** zwei Schieberteile (31) zur Ausbildung von zwei Haltestegen (14) an gegenüberliegenden Seiten des Farbkissenhalters (4) in entgegengesetzte Richtungen (28') beweglich angeordnet sind.

4. Vorrichtung (18) nach einem der Ansprüche 1 bis 3, **dadurch gekennzeichnet, dass** das erste Werkzeugteil (20) und das zweite Werkzeugteil (21) zwischen der Spritzstellung und der Trennstellung um eine vorgegebene Strecke (x) gemeinsam in Öffnungs- bzw. Schließrichtung (28) verschieblich sind, wobei das Spritzgießwerkzeug (19) Führungsmittel (32) aufweist, mit welchen die gemeinsame Verschiebung der Werkzeugteile (20, 21) in Öffnungs- bzw. Schließrichtung (28) in die Bewegung des Schieberteils (31) zwischen der Spritz- und der Trennstellung umsetzbar ist.

5. Vorrichtung (18) nach Anspruch 4, **dadurch gekennzeichnet, dass** die Führungsmittel (32) schräg zur Öffnungs- bzw. Schließrichtung, insbesondere unter einem Winkel von 6° bis 20°, angeordnete Führungsflächen (33, 34) aufweisen.

6. Vorrichtung (18) nach Anspruch 4 oder 5, **dadurch gekennzeichnet, dass** die eine Führungsfläche (33) an dem Schieberteil (31) vorgesehen ist, wobei die andere Führungsfläche (34) vorzugsweise am vorderen Ende einer Spritzdüse (23) ausgebildet ist.

7. Vorrichtung (18) nach einem der Ansprüche 4 bis 6, **dadurch gekennzeichnet, dass** die Führungsmittel (32) ein Feder- oder Zugkraftelement aufweisen, welches die Bewegung des Schieberteils (31) in die Trennstellung bewirkt.

8. Vorrichtung (18) nach einem der Ansprüche 3 bis 7, **dadurch gekennzeichnet, dass** das Spritzgießwerkzeug (19) einen Anschlag (35) zur Begrenzung der Verschiebung des ersten Werkzeugteils (20) in Öffnungsrichtung (28) aufweist, wobei das zweite Werkzeugteil (21) zum Trennen der Werkzeugteile (20, 21) relativ zu dem in die Anschlagstellung verschobenen ersten Werkzeugteil beweglich ist.

9. Vorrichtung (18) nach Anspruch 8, **dadurch gekennzeichnet, dass** das erste Werkzeugteil (20) mit einem Federmittel verbunden ist, welches das erste Werkzeugteil (20) in Richtung der der Trennstellung entsprechenden Anschlagstellung vorspannt.

10. Vorrichtung (18) nach einem der Ansprüche 1 bis 8, **dadurch gekennzeichnet, dass** das zweite Werkzeugteil (21) mit einem Antrieb, insbesondere einem Hydraulikantrieb, verbunden ist.

11. Verfahren zur Herstellung eines Farbkissenhalters (4) mit einem im Wesentlichen rechteckigen Boden (15) und davon abstehenden Wänden (16, 17), die einen Aufnahmeraum zur Aufnahme eines Farbkissens (5) begrenzen, wobei zumindest eine Wand (16) des Farbkissenhalters (4) einen in den Aufnahmeraum ragenden, sich über die gesamte Länge der Wand (16, 17) erstreckenden Haltesteg (14) zur Halterung des Farbkissens (5) aufweist, in einem Spritzgießvorgang mit einem ein erstes (20) und ein zweites Werkzeugteil (21) aufweisenden Spritzgießwerkzeug (19), welches in einer Schließstellung einen Formhohlraum (22) einschließt, wobei der Haltesteg (14) in einer Spritzstellung von einem sich über die gesamte Länge der Wand (16) erstreckenden Schieberteil (31) hintergriffen wird, welches anschließend in eine den Haltesteg (14) freigebende Trennstellung verschoben wird, **dadurch gekennzeichnet, dass** an einem der Werkzeugteile (20, 21) zumindest ein Auswerfer (29) zum Entfernen des Farbkissenhalters (4) aus dem Formhohlraum (22) betätigt wird, wobei das zumindest eine Schieberteil (31) von dem Auswerfer (29) verschieden ist, so dass der Farbkissenhalter in dem Formhohlraum (22) fixiert vorliegt, wenn das zumindest eine Schieberteil (31) zur Entformung von der Längsseite des Formhohlraums (22) wegbewegt wird.

## Claims

1. Apparatus (18) suitable for injection moulding an inking pad holder (4) with a substantially rectangular base (4), with an injection mould (19) including first (20) and second (21) mould portions, which, in a closed position, encloses a moulding cavity (22), wherein the first (20) and the second (21) mould portions are mounted so as to be movable relative to one another in an opening and closing direction (28), wherein the injection mould (19) includes at least one slider member (31) extending over the entire length of the moulding cavity (22), which is mounted to be movable in a direction (28') differing from the opening and closing direction (28) of the mould portions (20, 21) between an injection position engaging behind a retaining web (14) of the inking pad holder (4) and a separated position releasing the retaining web (14), **characterised in that** provided on one of the mould portions (20, 21) there is at least one ejector (29) for removing the inking pad holder (4) from the moulding cavity (22), wherein the at least one slider member (31) is different to the ejector (29) so that the inking pad holder is fixed in position in the moulding cavity (22) when the at least one slider member (31) is moved away from the longitudinal side of the moulding cavity (22) for the purpose of demoulding.

2. Apparatus as claimed in Claim 1, **characterised in that** the slider member (31) is arranged so as to be movable substantially perpendicular to the opening and closing direction (28) of the mould portions (20, 21) to form a retaining web (14) arranged substantially perpendicular to the wall.

3. Apparatus (18) as claimed in Claim 1 or 2, **characterised in that** two slider members (31) are arranged so as to be movable in opposite directions (28') to form two retaining webs (14) on opposite sides of the inking pad container (4).

4. Apparatus (18) as claimed in one of Claims 1 to 3, **characterised in that** the first mould portion (20) and the second mould portion (21) are movable together over a predetermined distance (x) in the opening and closing direction (28) between the injection position and the separated position, wherein the injection mould (19) includes guide means (32), with which the common movement of the mould portions (20, 21) in the opening and closing direction (28) is convertible into the movement of the slider member (31) between the injection and separated positions.

5. Apparatus (18) as claimed in Claim 4, **characterised in that** the guide means (32) include guide surfaces (33, 34) arranged obliquely to the opening and closing direction, particularly at an angle of 6° to 20°.

6. Apparatus (18) as claimed in Claim 4 or 5, **characterised in that** the one guide surface (33) is provided on the slider member (31), wherein the other guide surface (34) is preferably formed at the front end of an injection nozzle (23).

7. Apparatus (18) as claimed in one of Claims 4 to 6, **characterised in that** the guide means (32) includes a spring or tension element, which effects the movement of the slider member (31) into the separated position.

8. Apparatus (18) as claimed in one of Claims 3 to 7, **characterised in that** the injection mould (19) includes an abutment (35) for limiting the movement of the first mould portion (20) in the opening direction, wherein the second mould portion (21) is movable relative to the first mould portion moved into the abutting position to separate the mould portions (20, 21).

9. Apparatus (18) as claimed in Claim 8, **characterised in that** the first mould portion (20) is connected to a spring means, which biases the first mould portion (20) in the direction of the abutting position corresponding to the separated position.

10. Apparatus (18) as claimed in one of Claims 1 to 8, **characterised in that** the second mould portion (21) is connected to an actuator, particularly a hydraulic actuator.

11. A method of manufacturing an inking pad holder (4) with a substantially rectangular base (15) and walls (16, 17) projecting from it which define a reception space for receiving an inking pad (5), wherein at least one wall (16) of the inking pad holder (4) includes a retaining web (14) for holding the inking pad which projects into the reception space and extends over the entire length of the wall (16, 17), in an injection moulding process with an injection mould (19), including a first (20) and a second (21) mould portion, which, in a closed position, encloses a moulding cavity (22), wherein engaging behind the retaining web (14), in an injection position, there is a slider member (31) which extends over the entire length of the wall (16) and is subsequently moved into a separated position in which the retaining web (14) is released, **characterised in that** on one of the mould portions (20, 21) at least one ejector (29) is actuated to remove the inking pad holder (4) from the moulding cavity (22), wherein the at least one slider member (31) is different to the ejector (29) so that the inking pad holder is fixed in position in the moulding cavity (22) when the at least one slider member (31) is moved away from the longitudinal side of the moulding cavity (22) for the purpose of demoulding.

## Revendications

1. Dispositif (18) approprié à la coulée par injection d'un support de coussin encreur (4), présentant un fond sensiblement rectangulaire (15), avec un outil de coulée par injection (19) comprenant une première (20) et une seconde partie d'outil (21), qui, en position fermée, enferme une cavité de moulage (22), la première (20) et la seconde partie d'outil (21) étant montées mobiles l'une par rapport à l'autre en direction d'ouverture ou de fermeture (28), et l'outil de coulée par injection (19) présente au moins une partie formant poussoir (31) qui s'étend sur toute la longueur de la cavité de moulage (22) et qui est agencée mobile entre une position d'injection, engageant par l'arrière une barrette de maintien (14) du support de coussin encreur (4), et une position de séparation dégageant la barrette de maintien (14), dans une direction (28') qui diffère de la direction d'ouverture ou de fermeture (28) des parties d'outil (20, 21),
**caractérisé en ce que**
sur l'une des parties d'outil (20, 21) est prévu au moins un éjecteur (29) pour extraire le support de coussin encreur (4) hors de la cavité de moulage (22), et ladite au moins une partie formant poussoir (31) est différente de l'éjecteur (29), de sorte que le support de coussin encreur se présente fixé dans la cavité de moulage (22) lorsque ladite au moins une partie formant poussoir (31) est déplacée en éloignement du grand côté de la cavité de moulage (22) en vue du démoulage.

2. Dispositif (18) selon la revendication 1,
**caractérisé en ce que**
pour réaliser une barrette de maintien (14) agencée sensiblement perpendiculairement à la paroi, la partie formant poussoir (31) est agencée de façon mobile sensiblement perpendiculairement à la direction d'ouverture ou de fermeture (28) des parties d'outil (20, 21).

3. Dispositif (18) selon la revendication 1 ou 2,
**caractérisé en ce que**
deux parties formant poussoirs (31) sont agencées de façon mobile dans des directions opposées (28') pour réaliser deux barrettes de maintien (14) sur des côtés opposés du support de coussin encreur (4).

4. Dispositif (18) selon l'une des revendications 1 à 3,
**caractérisé en ce que**
la première partie d'outil (20) et la seconde partie d'outil (21) sont mobiles conjointement en direction d'ouverture ou de fermeture (28) d'un trajet donné (x) entre la position d'injection et la position de séparation, et
l'outil de coulée par injection (19) comprend des moyens de guidage (32) permettant de convertir le déplacement commun des parties d'outil (20, 21) en direction d'ouverture ou de fermeture (28) en le mouvement de la partie formant poussoir (31) entre la position d'injection et la position de séparation.

5. Dispositif (18) selon la revendication 4,
**caractérisé en ce que**
les moyens de guidage (32) présentent des surfaces de guidage (33, 34) agencées en oblique par rapport à la direction d'ouverture ou de fermeture, en particulier sous un angle de 6° à 20°.

6. Dispositif (18) selon la revendication 4 ou 5,
**caractérisé en ce que**
ladite une surface de guidage (33) est prévue sur la partie formant poussoir (31), et l'autre surface de guidage (34) est réalisée de préférence à l'extrémité avant d'une buse d'injection (23).

7. Dispositif (18) selon l'une des revendications 4 à 6,
**caractérisé en ce que**
les moyens de guidage (32) présentent un élément à effet ressort ou de traction qui provoque le mouvement de la partie formant poussoir (31) jusque dans la position de séparation.

8. Dispositif (18) selon l'une des revendications 3 à 7, **caractérisé en ce que** l'outil de coulée par injection (19) comprend une butée (35) pour limiter le mouvement de la première partie d'outil (20) en direction d'ouverture (28), et pour séparer les parties d'outil (20, 21), la seconde partie d'outil (21) est mobile par rapport à la première partie d'outil déplacée jusque dans la position de butée.

9. Dispositif (18) selon la revendication 8, **caractérisé en ce que** la première partie d'outil (20) est reliée à un moyen formant ressort qui met sous précontrainte la première partie d'outil (20) en direction de la position de butée qui correspond à la position de séparation.

10. Dispositif (18) selon l'une des revendications 1 à 8, **caractérisé en ce que** la seconde partie d'outil (21) est reliée à un entraînement, en particulier à un entraînement hydraulique.

11. Procédé de réalisation d'un support de coussin encreur (4) présentant un fond sensiblement rectangulaire (15) et des parois (16, 17) dressées depuis celui-ci, qui délimitent un espace de logement pour loger un coussin encreur (5), dans lequel au moins une paroi (16) du support de coussin encreur (4) comprend une barrette de maintien (14) pénétrant dans l'espace de logement, s'étendant sur toute la longueur de la paroi (16, 17) et destinée à maintenir le coussin encreur (5),
par une opération de coulée par injection avec un outil de coulée par injection (19) comprenant une première (20) et une seconde partie d'outil (21), qui, en position fermée, enferme une cavité de moulage (22), et
dans une position d'injection, la barrette de maintien (14) est engagée par l'arrière par une partie formant poussoir (31) qui s'étend sur toute la longueur de la paroi (16) et qui est ensuite déplacée jusque dans une position de séparation dégageant la barrette de maintien (14),
**caractérisé en ce que**
sur l'une des parties d'outil (20, 21), on actionne au moins un éjecteur (29) pour démouler le support de coussin encreur (4) hors de la cavité de moulage (22), et ladite au moins une partie formant poussoir (31) est différente de l'éjecteur (29) de sorte que le support de coussin encreur se présente fixé dans la cavité de moulage (22) lorsque ladite au moins une partie formant poussoir (31) est déplacée en éloignement du grand côté de la cavité de moulage (22) en vue du démoulage.
